# EUROPÄISCHE PATENTSCHRIFT

(11) **EP 2 605 903 B1**
(45) Veröffentlichungstag und Bekanntmachung des Hinweises auf die Patenterteilung: **10.03.2021**
(21) Anmeldenummer: 11757761.9
(22) Anmeldetag: 17.08.2011
(51) Int. Cl.: B32B 5/02, C04B 28/34

(54) **BRANDWIDERSTANDSFÄHIGES BAUTEIL UND VERFAHREN ZUR HERSTELLUNG DES BAUTEILS**
FIRE-RESISTANT COMPONENT AND PROCESS FOR PRODUCING THE COMPONENT
COMPOSANT RÉSISTANT AUX INCENDIES ET PROCÉDÉ DE FABRICATION DU COMPOSANT

(30) Priorität: 20.08.2010 DE 102010035037
(43) Veröffentlichungstag der Anmeldung: 26.06.2013
(73) Patentinhaber: IBV Holding GmbH, 49078 Osnabrück (DE)
(72) Erfinder: BREKER, Ronald, 41836 Hückelhoven (DE)
(74) Vertreter: Heinemann, Monica
(86) Internationale Anmeldenummer: PCT/EP2011/004135
(87) Internationale Veröffentlichungsnummer: WO 2012/022474

(56) Entgegenhaltungen:
- WO-A1-97/19033
- US-A- 4 569 878

## Beschreibung

Die Erfindung betrifft ein brandwiderstandsfähiges Bauteil sowie ein Verfahren zur Herstellung des Bauteils.

Solche Bauteile werden z. B. auf Passagierschiffen als Fensterrahmen und Brandschutzwände eingesetzt. Diese Bauteile müssen bestimmte Eigenschaften aufweisen, damit sie auf den Passagierschiffen eingebaut werden dürfen. Hierzu zählt eine Brandwiderstandsfähigkeit der Klasse B-15 nach IMO FTP Code, Resolution A.754(18) und IMO FTP Code Annex 1 Teil 3; diese erfordert unter vorbestimmten Bedingungen eine Nicht-Brennbarkeit, eine Standfestigkeit und eine maximale Temperatur an der dem Brand abgewandten Seite des Bauteils. Andere Bauteile wie z. B. Schottwände müssen die höheren Anforderungen der Klasse B-30 erfüllen.

Diese erforderliche Brandwiderstandsfähigkeit z. B. der Klassen B-15 oder B-30 wurde bisher nur mit wärmeisolierten Stahlkonstruktionen erreicht, die aufwendig herzustellen sind und ein relativ hohes Gewicht aufweisen. Weiterhin ist bei diesen Stahlkonstruktionen nach dem Einbau eine Verkleidung erforderlich, damit das Aussehen entsprechend gestaltet ist.

Es ist bekannt, Teile aus verstärkten organischen Harzen, z. B. glasfaserverstärktem Kunststoff (GFK) zu formen. Die Harze sind während der Verarbeitung fließfähig und härten nach einer bestimmten Zeit aus, was die Herstellung der Teile erleichtert. Die Teile sind preiswert herstellbar und der Formenvielfalt sind praktisch keine Grenzen gesetzt. Allerdings weisen diese Teile nicht die erforderliche Brandwiderstandsfähigkeit auf.

US 4,569,878 A beschreibt laminierte Materialien, die unter Verwendung von Schichten aus verstärkenden und / oder nicht verstärkenden Materialien in Kombination mit Schichten einer bekannten Zusammensetzung aufgebaut sind, um wasserbeständige Phosphatkeramikmaterialien bereitzustellen.

Weiterhin ist aus der EP 861 216 B1 eine anorganische Harzzusammensetzung bekannt, die nach EN 13501-1 in Klasse A1 als nicht entflammbar eingestuft ist. Die Harzzusammensetzung, die im Folgenden auch als Phosphatkeramik bezeichnet ist, wird unter dem Namen vubonite® vertrieben und wird vor der Verwendung aus einer festen pulverförmigen und einer flüssigen Komponente zu einer zäh-fließfähigen Masse vermischt. Diese Masse ist ähnlich wie organische Harze vielseitig zu verarbeiten, wobei einige der allgemein bekannten Nachteile vermieden werden. Die Harzzusammensetzung weist aber eine Wärmeleitung von 1 W/mK auf, so dass ohne weitere Maßnahmen die Anforderungen der Brandwiderstandsfähigkeit bezüglich der maximal zulässigen Temperatur an der dem Brand abgewandten Seite des Bauteils (wenn dieses in einer normalen Stärke (Dicke des Materials) von z. B. 4 mm gefertigt ist) nicht eingehalten werden können.

Eine erste Aufgabe der Erfindung ist es, ein Bauteil aus überwiegend gießfähigen Massen zu schaffen, die bei geringer Gesamtdicke und somit bei relativ geringem Gewicht die Anforderungen bezüglich der Brandwiderstandfähigkeit mindestens der Klasse B-15 erfüllen und weiterhin derart elastisch sind, dass bei hoher Wärmebeaufschlagung auftretende Deformierungen nicht zu einem Bruch des Bauteils führen.

Eine zweite Aufgabe besteht in der Bereitstellung eines Verfahrens zur Herstellung der Bauteile.

Die Aufgabe ist durch die Merkmale des Anspruchs 1 gelöst. Das Bauteil ist mehrschichtig aus Phosphatkeramik sowie aus Fasern gefertigt. Die Phosphatkeramik, die aus einer festen und einer flüssigen Komponente entsprechend der EP 861 216 B1 gemischt ist, ist feuerfest, das heißt sehr schwer entflammbar und druckfest. Die Fasern, die in die Phosphatkeramik eingebunden sind, verleihen dem Bauteil zusätzlich eine gute Zugfestigkeit, so dass das Bauteil insgesamt auch im Brandfall eine hohe Gesamtstabilität aufweist. Das Material kann wie z. B. glasfaserverstärkter Kunststoff (GFK) zu beliebigen Formen verarbeitet werden und kann hierbei relativ geringe Materialstärken aufweisen. Es ist relativ leicht und im Vergleich zu anderen Konstruktionen preiswert herstellbar.

Weiterhin umfasst das Bauteil auf dessen, einer potentiellen Hitzequelle zugewandten Fläche mindestens eine Schicht, die jeweils nur teilweise mit einer darunter, das heißt von der Hitzequelle entfernter, angeordneten Schicht zusammengefügt ist. Unter Einwirkung von großer Hitze von mehr als 700°C löst sich diese Schicht von der unteren ab, so dass ein Gang entsteht, der eine Isolation aus Gas bewirkt und durch den die heißen Gase in den Brandraum zurückgeleitet werden. Es wird also im Brandfall gezielt eine Delaminierung mindestens einer bestimmten Schicht des Bauteils herbeigeführt, um die Wärmeisolierung dann wesentlich zu verbessern. Die Wärmeleitfähigkeit des Bauteils wird also im Brandfall stark vermindert. Hierdurch wird eine Temperatur auf einer von dem Brandherd abgewandten Fläche des Bauteils nicht unzulässig erhöht. Brandtests nach den einschlägigen Normen für die Klasse B-15 haben gezeigt, dass die Temperatur auf der abgewandten Fläche mit maximal 75°C bis 140°C weit unter dem zulässigen Grenzwert von 225°C liegen.

Sind höhere Anforderungen an die Brandwiderstandsfähigkeit gestellt, werden mehrere der im vorigen Absatz beschriebenen Schichten angeordnet, so dass im Brandfall mehrere Gänge gebildet werden. Diese Schichten sind vorzugsweise direkt benachbart angeordnet.

Aufgrund der einfach zu fertigenden Formgebung ist das Bauteil vielseitig z. B. als Brandschutzwand, Fensterrahmen, Trennwand oder Kabinenmodul einsetzbar, besonders beim Bau von Passagierschiffen.

Die Unteransprüche betreffen die vorteilhafte Ausgestaltung der Erfindung.

In einer Ausgestaltung der Erfindung sind die Fasern in Form von Wirrvlies-Fasermatten aus Glasstapelfasern angeordnet. Glasfasern sind nicht brennbar und weisen eine hohe Zugfestigkeit auf. Wirrvlies-Fasermatten sind in unterschiedlichen Qualitäten auf dem Markt erhältlich und bilden mit der Phosphatkeramik einen innigen Verbund, so dass das Bauteil insgesamt eine hohe Stabilität aufweist. Ein Verbund der Fasern in der Matte wird entweder als Emulsionsbindung oder als Pulverbindung angeboten, was sich auf die Verarbeitbarkeit auswirkt und für die Anwendung entsprechend ausgewählt wird.

Das Bauteil ist dreischichtig aufgebaut, wobei eine erste der Schichten aus einer ersten Fasermatte gebildet ist, die mit der Phosphatkeramik getränkt ist, wobei eine zweite der Schichten aus einer zweiten Fasermatte gebildet ist, die mit der Phosphatkeramik benetzt ist, und wobei eine dritte der Schichten aus einer Vielzahl von dritten Fasermatten gebildet ist, die mit der Phosphatkeramik getränkt sind.

Die erste und die zweite Schicht bewirken im Brandfall die Wärmeisolierung: Die Oberfläche der ersten Schicht bricht auf und bildet so eine erste Isolationsschicht; die zweite Schicht löst sich teilweise von der dritten Schicht, so dass zwischen der zweiten und der dritten Schicht die Gänge gebildet werden, die einerseits eine Haupt-Isolationsschicht aus Gas umfassen und andererseits ein Abfließen der Gase in Richtung der Hitzequelle erlauben. Die erste und die zweite Schicht haften aneinander und bleiben weitgehend stabil erhalten. Die dritte Schicht bildet ein tragendes Teil, das für die Stabilität des gesamten Bauteils verantwortlich ist und durch die Hitzeeinwirkung nicht beeinträchtigt wird. Eine Anzahl der Fasermatten, die mindestens drei beträgt, und damit eine Dicke der dritten Schicht richtet sich nach der erforderlichen Stabilität und nach der geforderten Brandwiderstandsklasse.

Die erste Fasermatte weist ein Flächengewicht von 200 bis 400 g/m², insbesondere 200 bis 300 g/m², die zweite Fasermatte von 350 bis 550 g/m², insbesondere 400 bis 500 g/m², und die dritte Fasermatte von 350 bis 700 g/m², insbesondere 400 bis 500 g/m², auf. Diese Qualitäten haben sich für die Anforderungen als besonders geeignet erwiesen und ergeben die erforderliche Stabilität der einzelnen Schichten.

In einer weiteren Ausgestaltung weist das Bauteil zusätzlich zu den oben genannten Schichten eine Dekorationsschicht auf, deren Dicke bis zu 1,5 mm und maximal 2 mm beträgt. Die Dekorationsschicht ist auf die erste Schicht laminiert und demnach im Brandfall auf der, dem Brand zugewandten Seite des Bauteils. Die Dekorationsschicht schafft eine glatte Sichtseite, die z. B. mit handelsüblichen Lacken und oder mit anderen Materialien gestaltet werden kann.

In einer weiteren Ausgestaltung umfasst das Bauteil Kanäle, die zu der Hitzequelle gerichtete Öffnungen aufweisen. Die Kanäle wirken wie die Gänge als Isolierschicht. Die Kanäle sind entweder mit dem Herstellen der Bauteile geformt oder nach dem Herstellen z. B. mittels Fräsen eingearbeitet.

Die zweite Aufgabe ist durch die Merkmale der Ansprüche 5 und 6 gelöst, wobei sich die Verfahren durch eine Umkehrung der Reihenfolge und hierdurch bedingte Änderungen unterscheiden.

Zuerst wird eine geeignete Form bereitgestellt. Die Form entspricht der Ausgestaltung des zu formenden Bauteils und ist mehrfach verwendbar. Eine Phosphatkeramik wird in einer ausreichenden Menge aus einer festen und einer flüssigen Komponente nach Herstellervorschriften gemischt.

Eine erste Schicht des Bauteils wird gebildet. Hierfür wird eine erste Fasermatte entsprechend zugeschnitten, in die Form eingelegt und mit der Phosphatkeramik getränkt. Tränken bedeutet, dass so viel Phosphatkeramik aufgetragen und in die Fasermatte eingearbeitet wird, dass diese vollkommen von der Phosphatkeramik umschlossen ist; das heißt, die Phosphatkeramik benetzt auch vollständig die Form.

Dann wird eine zugeschnittene zweite Fasermatte auf die erste, noch nasse (nicht erhärtete) Schicht aufgelegt und mit der Phosphatkeramik zum Bilden einer zweiten Schicht benetzt (nass in nass). Benetzen bedeutet hier, dass die zweite Fasermatte zwar zum größten Teil, aber nicht vollkommen von der Phosphatkeramik umschlossen ist. Insbesondere soll die nach dem Herstellen der zweiten Schicht gebildete Oberfläche nicht vollkommen glatt sein.

Anschließend wird gewartet, bis die zweite Schicht zu härten beginnt.
Sobald das Härten der zweiten Schicht beginnt, wird eine dritte Schicht aus einer Vielzahl von Lagen gebildet, wobei für jede der Lagen eine dritte Fasermatte aufgelegt und mit der Phosphatkeramik getränkt wird. Das bedeutet, dass als Lage auf die angehärtete Oberfläche der zweiten Schicht die zugeschnittene dritte Fasermatte gelegt und mit der Phosphatkeramik getränkt wird und dass dann jeweils auf die nasse Oberfläche der Lage weitere Lagen in derselben Art und Weise aufgebracht werden (nass in nass).

Schließlich wird das Bauteil nach dem Erhärten aus der Form entnommen.

Beim Arbeiten nass in nass, wenn die erste gemeinsam mit der zweiten Schicht sowie die dritte Schicht aus den Lagen gefertigt werden, wird erreicht, dass ein quasi monolithischer Verbund entsteht, der sehr stabil ist. Das bedeutet, dieser monolithische Verbund besteht einerseits zwischen der ersten und der zweiten Schicht und andererseits zwischen den Lagen. Zwischen der zweiten und der dritten Schicht dagegen ist wegen des Anhärtens der zweiten Schicht vor dem Bilden der dritten Schicht gezielt ein wesentlich schwächerer Verbund vorhanden. Dieser dient als Sollbruchstelle für den Brandfall, so dass sich die wärmeisolierenden Gänge bilden können.

Es ist möglich, auch in umgekehrter Reihenfolge zu arbeiten, wie dies in Anspruch 6 angegeben ist; es wird also zuerst die dritte Schicht in der Form gefertigt und darauf die zweite und die erste Schicht aufgelegt. Vor dem Bilden der zweiten Schicht muss in diesem Fall die dritte Schicht anhärten.

Das Bilden einer Dekorationsschicht ist aus dem Stand der Technik prinzipiell bekannt. Das Auflegen des Abreißgewebes bewirkt, dass nach dessen Entfernung die Oberfläche sauber ist und eine definierte Struktur aufweist, die einen guten Verbund mit der dann aufgetragenen ersten Schicht gewährleistet. Beim Arbeiten in der umgekehrten Reihenfolge wird das Abreißgewebe auf die erste Schicht aufgedrückt und nach deren zumindest teilweisen Erhärten abgezogen.

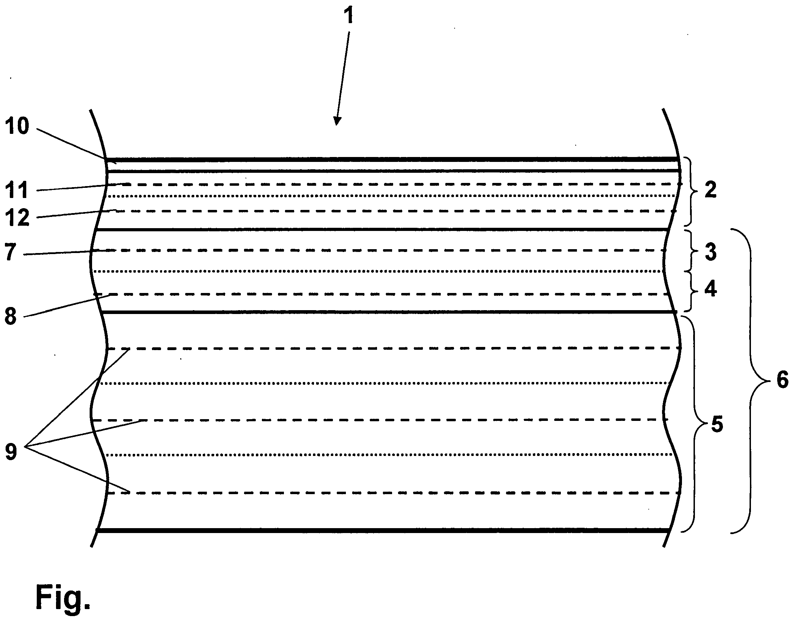

Die Erfindung wird anhand eines in der Zeichnung schematisch dargestellten Ausführungsbeispiels weiter erläutert.

Die einzige Figur zeigt unmaßstäblich den Aufbau eines Bauteils im Querschnitt.

Wie aus der Figur ersichtlich ist ein Bauteil 1, von dem ein Abschnitt eines Querschnitts dargestellt ist, aus einer Vielzahl von - hier vier - Schichten 2, 3, 4, 5 aufgebaut. Die Schichten 2, 3, 4, 5 sind nach der Figur von oben nach unten, das ist im Brandfall von einer dem Brand zugewandten zu einer dem Brand abgewandten Seite, eine Dekorationsschicht 2, eine erste Schicht 3, eine zweite Schicht 4 und eine dritte Schicht 5.

Ein für die Brandwiderstandsfähigkeit wesentlicher Aufbau 6 besteht aus der ersten, der zweiten und der dritten Schicht 3, 4, 5 und ist aus einer Phosphatkeramik sowie Fasern 7, 8, 9 aufgebaut. Die Phosphatkeramik ist aus einer flüssigen und einer festen Komponente gemischt, nach dem Mischen zäh-fließfähig und bindet unter Abgabe von Wärme innerhalb einer bestimmten Zeit ab; das heißt, sie erhärtet zu einer betonartigen Masse. Vor dem Erhärten ist die Phosphatkeramik wie z. B. Polyesterharze verarbeitbar.

Die erste Schicht 3 umfasst eine erste Fasermatte 7, die mit der Phosphatkeramik getränkt ist. Die erste Fasermatte 7 ist eine pulvergebundene Wirrvlies-Glasfasermatte mit einem Flächengewicht von ca. 225 g/m².

Die zweite Schicht 4 umfasst eine zweite Fasermatte 8, die mit der Phosphatkeramik benetzt ist. Die zweite Fasermatte 8 ist eine emulsionsgebundene Wirrvlies-Glasfasermatte mit einem Flächengewicht von ca. 450 g/m².

Die erste Schicht 3 und die zweite Schicht 4 sind durch entsprechende Fertigung monolithisch zusammengefasst, was in der Figur durch eine punktierte Trennlinie dargestellt ist.

Die dritte Schicht 5 umfasst eine Vielzahl von - hier drei - dritten Fasermatten 9, die lagenweise mit der Phosphatkeramik getränkt sind. Die dritte Fasermatte 8 ist eine pulvergebundene Wirrvlies-Glasfasermatte mit einem Flächengewicht von ca. 450 g/m². Die dritte Schicht 5 ist monolithisch, was in der Figur durch punktierte Trennlinien zwischen den Lagen dargestellt ist, und weist eine Dicke von circa 5 mm auf.

Die erste Schicht 3 und die zweite Schicht 4, die monolithisch zusammengefügt sind, sind auf die monolithische dritte Schicht 5 laminiert, wobei diese Laminierung bewusst unvollkommen ist. Hierdurch ist es möglich, dass sich diese beiden Monolithe im Brandfall voneinander lösen können und so Gänge bilden.

Die Dekorationsschicht 2 ist aus schwer entflammbarem Polyesterharz sowie Fasern gebildet und ist fest auf die erste Schicht 3 laminiert. Die Dekorationsschicht 2 umfasst eine Lage aus Gelcoat 10, eine Lage aus mit dem Polyesterharz getränktem Faservlies 11 sowie eine Lage aus einer mit dem Polyesterharz getränkten vierten Fasermatte 12. Eine Dicke der Dekorationsschicht 2 beträgt hier 1,4 mm.

Die Lage aus Gelcoat 10 weist eine Dicke von maximal 600 µm auf. Das Gelcoat 10 ist ein bekanntes kieselsäure-haltiges Polyesterharz, das gut bearbeitbar, z. B. schleifbar und lackierbar ist. Es weist eine glatte und dichte Oberfläche auf und kann eingefärbt sein.

Das Faservlies 11 ist eine Wirrvlies- Glasfasermatte aus sehr feinen Fasern mit einem Flächengewicht von 30 g/m² und weist relativ glatte Oberflächen auf. Das Faservlies 11 ist mit dem Polyesterharz getränkt. Diese Lage verhindert, dass Fasern der vierten Fasermatte 12 in das Gelcoat 10 dringen und so deren Aussehen und/oder Bearbeitbarkeit stören.

Die vierte Fasermatte 12 ist eine emulsionsgebundene Wirrvlies- Glasfasermatte mit einem Flächengewicht von 225 g/m² und ist mit dem Polyesterharz getränkt.

Im Brandfall löst sich die Dekorationsschicht 2 von der ersten Schicht 3.

Eine Fertigung des Bauteils 1 erfolgt bevorzugt von der Lage aus Gelcoat 10 zu der dritten Schicht 5; es kann auch in der umgekehrten Reihenfolge gearbeitet werden.

Eine mit Trennmittel behandelte Form wird zur Verfügung gestellt und die Fasermatten 7, 8, 9, 12 sowie das Faservlies 11 werden zugeschnitten. Kurz vor der jeweiligen Verwendung werden die Phosphatkeramik aus einer festen und einer flüssigen Komponente sowie das Gelcoat 10 und das schwer entflammbare Polyesterharz separat mit Härter gemischt.

Das Gelcoat 10 wird dünn mit einem Pinsel oder einer Spritzpistole auf die Form aufgetragen. Mit der weiteren Fertigung wird gewartet, bis das Gelcoat 10 erhärtet ist.

Auf das erhärtete Gelcoat 10 wird das zugeschnittene Faservlies 11 aufgelegt und mittels eines Pinsels mit dem Polyesterharz getränkt. Auf die so entstandene Oberfläche aus dem nassen, also noch nicht erhärteten Polyesterharz wird die vierte Fasermatte 12 aufgelegt und ebenfalls mit dem Polyesterharz getränkt. Auf diese neue Oberfläche wird ein sogenanntes Abreißgewebe aufgelegt und mit einer Rolle leicht angedrückt.

Nach dem Erhärten des Polyesterharzes wird das Abreißgewebe von jenem abgezogen. Die Oberfläche des Polyesterharzes weist jetzt eine definierte Oberflächenstruktur entsprechend einer Struktur des Abreißgewebes auf und ist sauber. Auf diese Oberfläche wird die erste Fasermatte 7 aufgelegt, mit der Phosphatkeramik getränkt und so die erste Schicht 3 gebildet. Bei diesem Tränken wird darauf geachtet, dass die Phosphatkeramik besonders homogen ohne wesentliche Lufteinschlüsse aufgetragen und in die erste Fasermatte 7 so eingearbeitet wird, dass auch die Oberfläche des Polyesterharzes beschichtet ist.

Auf die erste nasse Schicht 3 wird die zweite Fasermatte 8 aufgelegt sowie mit der Phosphatkeramik benetzt und so die zweite Schicht 4 gebildet. Hierbei wird - im Gegensatz zum Tränken - die zweite Fasermatte 8 bewusst unvollständig mit der Phosphatkeramik beschichtet, und es werden Lufteinschlüsse zugelassen. Eine so gefertigte Oberfläche der zweiten Schicht 4 weist also sowohl die Fasern als auch die Phosphatkeramik auf und ist entsprechend rau. Ein guter Verbund zwischen der ersten Schicht 3 und der zweiten Schicht 4 ist aber gewährleistet, weil die zweite Fasermatte 8 auf die nasse Phosphatkeramik der ersten Schicht 3 aufgelegt und dann benetzt wird, wobei die Phosphatkeramik der zweiten Schicht 4 in die der ersten Schicht 3 fließt.

Es wird gewartet, bis die Phosphatkeramik der zweiten Schicht 4 zu erhärten beginnt.

Mit dem Beginn der Erhärtung wird lagenweise die dritte Schicht 5 gebildet. Hierfür wird die dritte Fasermatte 9 auf die zweite Schicht 4 aufgelegt und mit der Phosphatkeramik getränkt; diese beiden Vorgänge werden solange wiederholt, bis die vorbestimmte Anzahl der Lagen gefertigt ist, hier also zweimal. Hierbei wird die dritte Fasermatte 9 jeweils auf die nasse, also nicht erhärtete Phosphatkeramik der vorher gefertigten Lage aufgelegt. Das Tränken erfolgt z. B. mittels eines Pinsels oder durch Gießen und anschließendes Einarbeiten und gleichmäßiges Verteilen.

Es wird gewartet, bis die Phosphatkeramik erhärtet ist und dann das Bauteil 1 aus der Form entnommen. Gegebenenfalls werden Ränder des Bauteils 1 nachgearbeitet.
Beim Arbeiten in der umgekehrten Reihenfolge wird die dritte Fasermatte 9 auf die Form aufgelegt und mit der Phosphatkeramik getränkt. Die weiteren Lagen und somit die dritte Schicht 5 werden gefertigt.

Es wird gewartet, bis die Phosphatkeramik zu erhärten beginnt.

Mit dem Beginn der Erhärtung wird die zweite Schicht 4 gebildet. Hierfür wird die zweite Fasermatte 8 auf die dritte Schicht 5 aufgelegt und mit der Phosphatkeramik benetzt. Hierbei wird darauf geachtet, dass die Phosphatkeramik nur teilweise, also unvollständig durch die zweite Fasermatte 8 bis auf dritte Schicht 5 durchdringt und so im Brandfall Sollbruchstellen für die Bildung der Gänge gegeben sind.

Auf die nasse Oberfläche der zweiten Schicht 4 wird die erste Fasermatte 7 aufgelegt und mit der Phosphatkeramik getränkt. Auf die nasse Oberfläche der so gebildeten ersten Schicht 3 wird das Abreißgewebe aufgelegt und leicht angedrückt.

Mit der Fertigung der Dekorationsschicht 2 wird gewartet, bis die erste Schicht 3 gehärtet ist. Dann wird das Abreißgewebe abgezogen, die vierte Fasermatte 12 aufgelegt und mit dem Polyesterharz getränkt. Auf die so gebildete nasse Oberfläche wird das Faservlies 11 aufgelegt und mit dem Polyesterharz getränkt.

Nach dem Erhärten des Polyesterharzes wird das Gelcoat 10 aufgetragen.

Wenn das Bauteil 1 ohne die Dekorationsschicht 2 gewünscht ist, entfallen die entsprechenden Arbeitsschritte einschließlich des Auflegens des Abreißgewebes.

Falls das Bauteil 1 als weitgehend ebene Platte gebildet ist, sind optional Kanäle auf der dem potentiellen Brandherd zugewandten Seite eingearbeitet. Die Kanäle sind mit einem vorbestimmten gegenseitigen Abstand angeordnet und weisen zu dem Brandherd gerichtete Öffnungen auf. Hierdurch wird die Wärmeisolierung weiter verbessert und somit die Brandwiderstandsfähigkeit erhöht. Bei einer Verwendung der Platte sind die Kanäle mit Ausnahme der Öffnungen durch ein anderes feuerfestes Element abgedeckt.

## Patentansprüche

1. Brandwiderstandsfähiges Bauteil (1), das die Anforderungen zumindest der Klasse B-15 erfüllt, das mehrschichtig aus Phosphatkeramik sowie aus Fasern (7, 8, 9) gefertigt ist, und dessen Schichtaufbau auf einer, einer potentiellen Hitzequelle zugewandten Fläche mindestens eine Schicht (4) umfasst, die nur teilweise mit einer darunter, das heißt von der Hitzequelle entfernter, angeordneten Schicht (5) zusammengefügt ist, wobei es dreischichtig aufgebaut ist, wobei eine erste der Schichten (3) aus einer ersten Fasermatte (7) mit einem Flächengewicht von 200 bis 400 g/m² gebildet ist, die mit der Phosphatkeramik getränkt ist, wobei eine zweite der Schichten (4) aus einer zweiten Fasermatte (8) mit einem Flächengewicht von 350 bis 550 g/m² gebildet ist, die mit der Phosphatkeramik benetzt ist, und wobei eine dritte der Schichten (5) aus einer Vielzahl von dritten Fasermatten (9) mit einem Flächengewicht von 350 bis 700 g/m² gebildet ist, die mit der Phosphatkeramik getränkt sind.

2. Bauteil nach Anspruch 1, **dadurch gekennzeichnet, dass** die Fasern (7, 8, 9) in Form von Wirrvlies- Fasermatten aus Glasstapelfasern angeordnet sind.

3. Bauteil nach einem der Ansprüche 1 oder 2, das zusätzlich eine Dekorationsschicht (2) aufweist.

4. Bauteil nach einem der Ansprüche 1 bis 3, das Kanäle umfasst, die zu der Hitzequelle gerichtete Öffnungen aufweisen.

5. Verfahren zum Herstellen eines brandwiderstandsfähigen Bauteils nach einem der Ansprüche 1 bis 4, das die Anforderungen zumindest der Klasse B-15 erfüllt, **gekennzeichnet durch** folgende Schritte in der angegebenen Reihenfolge:
- Bereitstellen einer geeigneten Form;
- Mischen einer Phosphatkeramik aus einer festen und einer flüssigen Komponente;
- Bilden einer ersten Schicht (3) durch Einlegen einer ersten Fasermatte (7) in die Form und Tränken der ersten Fasermatte (7) mit der Phosphatkeramik;
- Auflegen einer zweiten Fasermatte (8) auf die nasse erste Schicht (3) und Benetzen der zweiten Fasermatte (8) mit der Phosphatkeramik zum Bilden einer zweiten Schicht (4);
- Warten, bis die zweite Schicht (4) beginnt zu erhärten;
- Bei dem Beginn des Erhärtens der zweiten Schicht (4): Bilden einer dritten Schicht (5) aus einer Vielzahl von Lagen, wobei für jede der Lagen eine dritte Fasermatte (9) aufgelegt und mit der Phosphatkeramik getränkt wird;
- Entnehmen des erhärteten Bauteils (1) aus der Form.

6. Verfahren zum Herstellen eines brandwiderstandsfähigen Bauteils nach einem der Ansprüche 1 bis 4, das die Anforderungen zumindest der Klasse B-15 erfüllt, **gekennzeichnet durch** folgende Schritte in der angegebenen Reihenfolge:
- Bereitstellen einer geeigneten Form;
- Mischen einer Phosphatkeramik aus einer festen und einer flüssigen Komponente;
- Bilden einer dritten Schicht (5) in der Form aus einer Vielzahl von Lagen, wobei für jede der Lagen eine dritte Fasermatte (9) aufgelegt und mit der Phosphatkeramik getränkt wird;
- Warten, bis die dritte Schicht (5) beginnt zu erhärten;
- Bei dem Beginn des Erhärtens der dritten Schicht (5): Auflegen einer zweiten Fasermatte (8) auf die dritte Schicht (5) und Benetzen der zweiten Fasermatte (8) mit der Phosphatkeramik zum Bilden einer zweiten Schicht (4) ;
- Bilden einer ersten Schicht (3) durch Auflegen einer ersten Fasermatte (7) und Tränken der ersten Fasermatte (7) mit der Phosphatkeramik;
- Entnehmen des erhärteten Bauteils (1) aus der Form.

7. Verfahren nach Anspruch 5 oder 6, wobei vor bzw. nach dem Bilden der ersten Schicht eine Dekorationsschicht (2) gebildet wird.

8. Verfahren nach Anspruch 7, wobei auf die Form ein Gelcoat (10) aufgetragen wird, dass nach einem Erhärten des Gelcoats ein Faservlies (11) auf das Gelcoat (10) aufgelegt und mit einem schwer entflammbaren Polyesterharz getränkt wird, dass auf das getränkte Faservlies eine vierte Fasermatte (12) aufgelegt und mit dem Polyesterharz getränkt wird, dass auf die getränkte vierte Fasermatte (12) ein Abreißgewebe mit leichtem Druck aufgedrückt wird und dass nach einem Erhärten des Polyesterharzes das Abreißgewebe entfernt und anschließend die erste Schicht (3) gebildet wird,
wobei die Fertigung in der angegebenen bzw. in umgekehrter Reihenfolge durchgeführt wird.

## Claims

1. Fire-resistant component (1), which fulfils the requirements of at least class B-15 and is manufactured from multiple layers of phosphate ceramic and also of fibres (7, 8, 9), and the layer structure of which comprises, on a surface facing a potential heat source, at least one layer (4) which is joined together only partially with a layer (5) arranged underneath, i.e. away from the heat source, wherein it has a three-layer structure, wherein a first of the layers (3) is formed of a first fibre mat (7) with a weight per surface area of from 200 to 400 g/m² which is impregnated with the phosphate ceramic, wherein a second of the layers (4) is formed of a second fibre mat (8) with a weight per surface area of from 350 to 550 g/m² which is wetted with the phosphate ceramic, and wherein a third of the layers (5) is formed of a plurality of third fibre mats (9) with a weight per surface area of from 350 to 700 g/m² which are impregnated with the phosphate ceramic.

2. Component according to claim 1, **characterized in that** the fibres (7, 8, 9) are arranged in the form of random nonwoven fibre mats of glass-staple fibres.

3. Component according to one of claims 1 or 2, which additionally has a decorative layer (2).

4. Component according to one of claims 1 to 3, which comprises channels which have openings directed towards the heat source.

5. Process for producing a fire-resistant component according to one of claims 1 to 4, which fulfils the requirements of at least class B-15, **characterized by** the following steps in the order indicated:
- providing a suitable mould;
- mixing a phosphate ceramic from a solid component and a liquid component;
- forming a first layer (3) by placing a first fibre mat (7) into the mould and impregnating the first fibre mat (7) with the phosphate ceramic;
- placing a second fibre mat (8) onto the wet first layer (3) and wetting the second fibre mat (8) with the phosphate ceramic to form a second layer (4);
- waiting until the second layer (4) begins to harden;
- when the second layer (4) starts to harden: forming a third layer (5) of a plurality of plies, wherein for each of the plies a third fibre mat (9) is placed on top and impregnated with the phosphate ceramic;
- removing the hardened component (1) from the mould.

6. Process for producing a fire-resistant component according to one of claims 1 to 4, which fulfils the requirements of at least class B-15, **characterized by** the following steps in the order indicated:
- providing a suitable mould;
- mixing a phosphate ceramic from a solid component and a liquid component;
- forming, in the mould, a third layer (5) of a plurality of plies, wherein for each of the plies a third fibre mat (9) is placed on top and impregnated with the phosphate ceramic;
- waiting until the third layer (5) begins to harden;
- when the third layer (5) starts to harden: placing a second fibre mat (8) onto the third layer (5) and wetting the second fibre mat (8) with the phosphate ceramic to form a second layer (4);
- forming a first layer (3) by placing a first fibre mat (7) on top and impregnating the first fibre mat (7) with the phosphate ceramic;
- removing the hardened component (1) from the mould.

7. Process according to claim 5 or 6, wherein a decorative layer (2) is formed before or after the formation of the first layer.

8. Process according to claim 7, wherein a gelcoat (10) is applied onto the mould, after the gelcoat hardens, a fibre nonwoven (11) is placed onto the gelcoat (10) and impregnated with a flame-resistant polyester resin, a fourth fibre mat (12) is placed onto the impregnated fibre nonwoven and impregnated with the polyester resin, a peel ply is pressed onto the impregnated fourth fibre mat (12) with a light pressure and, after the polyester resin hardens, the peel ply is removed and then the first layer (3) is formed, wherein the manufacture is carried out in the order indicated or in reverse order.

## Revendications

1. Composant résistant au feu (1), qui remplit au moins les exigences de la classe B-15 et qui est fabriqué à partir de multiples couches de céramique de phosphate ainsi que de fibres (7, 8, 9), et dont la structure en couches comprend, sur une surface orientée vers une source de chaleur potentielle, au moins une couche (4) qui n'est jointe que partiellement à une couche (5) disposée en dessous, c'est-à-dire plus loin de la source de chaleur, le composant présentant une structure à trois couches, dans laquelle une première des couches (3) est formée d'un premier mat de fibres (7) d'un poids par unité de surface de 200 à 400 g/m² qui est imprégné avec la céramique de phosphate, une deuxième des couches (4) est formée d'un deuxième mat de fibres (8) d'un poids par unité de surface de 350 à 550 g/m² qui est humidifié avec la céramique de phosphate, et une troisième des couches (5) est formée d'une pluralité de troisièmes mats de fibres (9) d'un poids par unité de surface de 350 à 700 g/m² qui sont imprégnés avec la céramique de phosphate.

2. Composant selon la revendication 1, **caractérisé en ce que** les fibres (7, 8, 9) sont agencées sous forme de mats de fibres non-tissés aléatoires de verranne.

3. Composant selon l'une des revendications 1 ou 2, lequel comporte de plus une couche décorative (2).

4. Composant selon l'une des revendications 1 à 3, lequel comprend des canaux présentant des ouvertures orientées vers la source de chaleur.

5. Processus de production d'un composant résistant au feu selon l'une des revendications 1 à 4, lequel remplit au moins les exigences de la classe B-15, **caractérisé par** les étapes suivantes dans l'ordre indiqué:
- fourniture d'un moule adapté;
- mélange d'une céramique de phosphate provenant d'un composant solide et d'un composant liquide;
- formation d'une première couche (3) en plaçant un premier mat de fibres (7) dans le moule et imprégnant le premier mat de fibres (7) avec la céramique de phosphate;
- placement d'un deuxième mat de fibres (8) sur la première couche humide (3) et humidification du deuxième mat de fibres (8) avec la céramique de phosphate pour former une deuxième couche (4);
- pause jusqu'à ce que la deuxième couche (4) commence à durcir;
- quand la deuxième couche (4) commence à durcir : formation d'une troisième couche (5) d'une pluralité de plis, dans laquelle pour chacun des plis un troisième mat de fibres (9) est placé par-dessus et imprégné avec la céramique de phosphate;
- retrait du composant durci (1) du moule.

6. Processus de production d'un composant résistant au feu selon l'une des revendications 1 à 4, lequel remplit au moins les exigences de la classe B-15, **caractérisé par** les étapes suivantes dans l'ordre indiqué:
- fourniture d'un moule adapté;
- mélange d'une céramique de phosphate provenant d'un composant solide et d'un composant liquide;
- formation, dans le moule, d'une troisième couche (5) d'une pluralité de plis, dans laquelle pour chacun des plis un troisième mat de fibres (9) est placé par-dessus et imprégné avec la céramique de phosphate;
- pause jusqu'à ce que la troisième couche (5) commence à durcir;
- quand la troisième couche (5) commence à durcir : placement d'un deuxième mat de fibres (8) sur la troisième couche (5) et humidification du deuxième mat de fibres (8) avec la céramique de phosphate pour former une deuxième couche (4);
- formation d'une première couche (3) en plaçant un premier mat de fibres (7) par-dessus et imprégnant le premier mat de fibres (7) avec la céramique de phosphate;
- retrait du composant durci (1) du moule.

7. Processus selon la revendication 5 ou 6, dans lequel une couche décorative (2) est formée avant ou après la formation de la première couche.

8. Processus selon la revendication 7, dans lequel un gelcoat (10) est appliqué sur le moule, après que le gelcoat durcit, un nontissé de fibres (11) est placé par-dessus le gelcoat (10) et imprégné avec une résine de polyester ignifuge, un quatrième mat de fibres (12) est placé par-dessus le nontissé de fibres imprégné et imprégné avec la résine de polyester, un pli pelable est pressé sur le quatrième mat de fibres imprégné (12) avec une légère pression et, après le durcissement de la résine de polyester, le pli pelable est retiré puis la première couche (3) est formée, la fabrication étant réalisée dans l'ordre indiqué ou dans l'ordre inverse.
